# EUROPEAN PATENT APPLICATION

(11) **EP 2 072 246 A2**
(43) Date of publication of application: **24.06.2009**
(21) Application number: 08381035.8
(22) Date of filing: 22.10.2008
(51) Int. Cl.: B32B 15/14, B32B 15/20

(54) **Aluminium profile for covering wooden surface and procedure for obtaining said profile**

(30) Priority: 17.12.2007 ES 200703341
(71) Applicant: Codifel, S.L., 08182 Sant Feliu de Codines (ES)
(72) Inventor: LLOVERAS CALVO, Joan, 08182, SANT FELIU DE CODINES (ES)
(74) Representative: Martin Santos, Victoria Sofia

(57) **Abstract**

Aluminium profile (1) used to cover wooden surfaces which is manually affixed by means of any adhesive, obtained on the basis of aluminium sheet which on one of its faces is rubbed or sanded, painting on this face a primer paint (2) on which a non-woven cellulose fabric is affixed, carrying out the whole process automatically and continuously and storing it on coils for subsequent cutting of the profiles to the desired geometry; additionally, on the non-affixable face of the aluminium profile, various finishes may be provided, either the aluminium sheet itself or covered by means of an affixed wooden veneer or a sheet of PVC.

## Description

### OBJECT OF THE INVENTION

The object of the invention is an aluminium profile for covering wooden surfaces, as well as the procedure for obtaining said profile, where the profile serves as a means for covering the edges of the wood.

The present invention of an aluminium profile is characterised by the nature and arrangement of the layers which make up the aluminium profile of the invention and which permit the use of any type of adhesive in the affixing process, as well as manually affixing it without the need for any type of machine.

Therefore, this invention is circumscribed within the scope of aluminium profiles designed to be affixed to a wooden surface.

### BACKGROUND TO THE INVENTION

Currently, aluminium profiles designed to carry out the function of corners on wooden surfaces are treated on one of their two faces, with one of the faces intact and it will be on this that the final finish is carried out.

With respect to the internal face, which will be affixed to the wood, the treatment applied is as follows: Firstly, the interior face shall be rubbed or sanded to create some porosity in the smooth surface, then it is subsequently painted with a coat of primer or paint which will permit the subsequent adherence of another paint or adhesive, finally the aluminium profile will be affixed to the wood, using a polyurethane glue for this purpose and a special machine designed to affix the aluminium plate.

Therefore, the operation of fixation to the aluminium corner on a wooden surface consists of an industrial operation which also involves a high cost.

Given the difficulties existing in the aluminium profiles designed for corners, the object of this invention is to overcome the previous difficulties developing an aluminium profile designed as a corner which is easily installed without the need for any industrial machinery as well as providing the benefit of reduced costs.

### DESCRIPTION OF THE INVENTION

The invention of an aluminium profile to cover wooden surfaces is obtained on the basis of an aluminium plate which may affixed manually, and using any type of glue.

For this purpose, the aluminium plate is provided with a face which may comprise the visible surface or be provided with any other finish, whereas the opposite face is subject to a prior treatment consisting of the following stages:
- Application of a coat of primer paint on the rubbed surface,
- Fixing of a non-woven cellulose fabric on the face primed with primer paint.

The foregoing stages of production of the aluminium profile which is the object of the invention is made in an automatic continuous process, obtaining coils from which the aluminium profiles will be cut to the desired dimensions.

Following the treatment of the aluminium profile, this may be affixed directly onto the wooden edges using any type of glue and carrying out the fixation manually without the need for specialised machinery of any kind.

Therefore, the adherence shall be that of a non-woven cellulose fabric against the wood.

In order to obtain the best results from the aluminium profile, it should have a thickness of between 0.3 and 1.5 mm, whereas the non-woven fabric should have a weight of between 10 and 100 g/m2.

The aluminium profile which is the object of the invention may be provided with some type of finish on the opposite face to that of fixation, with the aluminium plate being that which remains as the visible face, or either adhering to the non-affixable face of the aluminium plate a sheet of wood or PVC or any other material, such as for example, ABS, uniform layer both in material and in colour, melamine etc.

### DESCRIPTION OF THE DRAWINGS

In order to complete the description below and to assist in a better comprehension of its characteristics, the present descriptive report is accompanied by a set of plans with figures representing in an illustrative but not restrictive way the most significant details of the invention.

Figure 1, shows a perspective view of the aluminium profile for covering wooden parts which are the object of the invention.

Figure 2 shows a representation of the previous aluminium profile in which the non-affixable face of the aluminium plate has been covered by a wood veneer.

### PREFERRED EMBODIMENT OF THE INVENTION

In the light of the figures below, a preferred embodiment of the proposed invention is described.

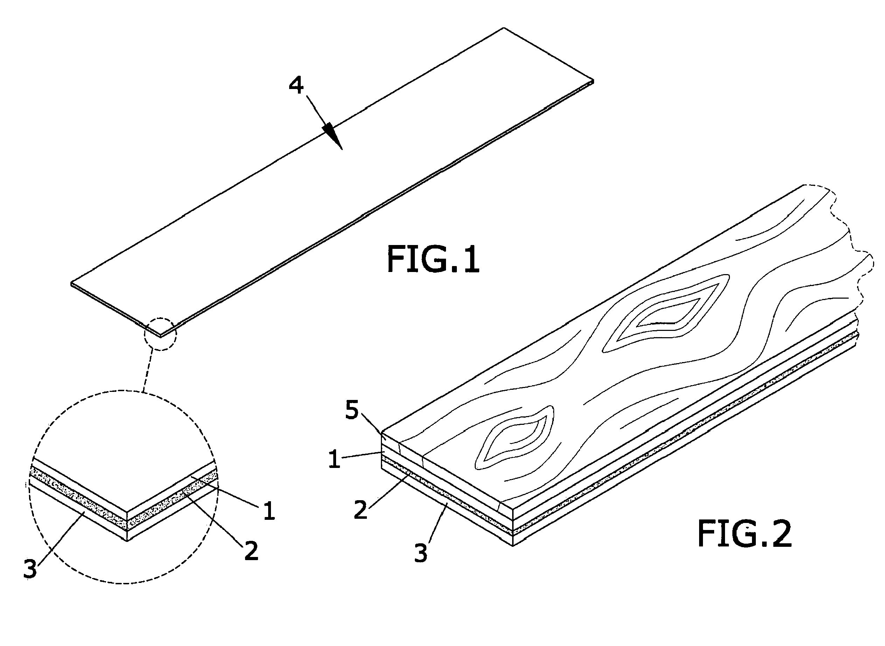

Figure 1 shows how the aluminium profile (1) shows an intact face (4) which in this case comprises the visible face, whereas the opposing face is subjected to sanding or rubbing and on which a primer paint (2) has been applied.

As previously described, the aluminium profile should have a thickness of between 0.3 and 1.5 mm, whereas the non-woven fabric should have a weight of between 10 and 100 g/m2

The aluminium profile is obtained from a sheet of aluminium on which the previously described process is carried out continuously in an automatic manner, thus obtaining coils from which the aluminium profiles will be cut to the desired geometry.

Due to the characteristics of the aluminium profile which is the object of the invention, it is possible to carry out the fixation manually with conventional adhesives on the edges of the wooden boards.

Figure 2 shows one of the possible forms of alternative embodiment with respect to the non-affixable surface of the aluminium sheet, as has been mentioned the finish may be the non-affixable face if the aluminium or it may adhere to that surface.
a wooden veneer (5) such as that shown or a sheet of PVC, or any other material which serves to provide the finish to the arrangement.

The essential nature of this invention is not altered by any variations in materials, form, size and arrangement of its component elements, which are described in a non-restrictive manner, with this being sufficient to proceed to its reproduction by an expert.

## Claims

1. Aluminium profile for covering wooden surfaces obtained from a sheet of treated aluminium **characterised in that** one of the faces of the aluminium sheet, having been rubbed or sanded, is painted with primer onto which a non-woven cellulose fabric is affixed.

2. Aluminium profile for covering wooden surfaces according to claim 1, **characterised in that** the aluminium sheet has a thickness of between 0.3 and 1.5 mm.

3. Aluminium profile for covering wooden surfaces according to claims 1 or 2, **characterised in that** the non-woven cellulose fabric has a weight of between 10 and 100 g/m2.

4. Aluminium profile for covering wooden surfaces according to any of the previous claims **characterised in that** a wood veneer is arranged on the non-affixable face of the aluminium sheet.

5. Aluminium profile for covering wooden surfaces according to any of the previous claims **characterised in that** a layer of PVC is arranged on the non-affixable face of the aluminium sheet.

6. Aluminium profile for covering wooden surfaces according to any of the previous claims **characterised in that** a layer of ABS is arranged on the non-affixable face of the aluminium sheet.

7. Aluminium profile for covering wooden surfaces according to any of the previous claims **characterised in that** a uniform layer both in material and in colour is arranged on the non-affixable face of the aluminium sheet.

8. Aluminium profile for covering wooden surfaces according to any of the previous claims **characterised in that** a layer of melamine is arranged on the non-affixable face of the aluminium sheet.

9. Procedure for obtaining an aluminium profile such as that previously claimed used to cover wooden surfaces **characterised in that** the necessary steps for obtaining said profile are as follows:
- Rubbing or sanding of the faces of an aluminium sheet for making the smooth surfaces porous.
- Application of a coat of primer paint on the rubbed surface,
- Affixing on the face painted with primer of a non-woven cellulose fabric.
The whole process is carried out in an automatic continuous manner, and is stored on coils for subsequent cutting of profiles with the desired geometry and dimensions.
